# EUROPEAN PATENT SPECIFICATION

(11) **EP 2 085 216 B1**
(45) Date of publication and mention of the grant of the patent: **20.04.2016**
(21) Application number: 09151289.7
(22) Date of filing: 26.01.2009
(51) Int. Cl.: B32B 27/32

(54) **Thin film for waste packing cassettes**
Dünnfilm für Abfallverpackungskassetten
Film fin à utiliser pour l'emballage de déchets malodorants

(30) Priority: 29.01.2008 EP 08150769
(43) Date of publication of application: 05.08.2009
(73) Proprietor: Flexopack S A, 19400 Koropi (GR)
(72) Inventor: Gkinosatis, Dimitris, 19400 Koropi Attica (GR)
(74) Representative: Isarpatent

(56) References cited:
- WO-A-2008/091321
- WO-A-2008/118554
- US-A- 5 298 202
- US-A- 6 013 378
- US-A1- 2003 213 804
- US-A1- 2003 218 022
- US-A1- 2005 064 123
- US-A1- 2006 177 641
- ANONYMOUS: "Some benefits from the use of metallocene ethylene polymers in blown and cast films" RESEARCH DISCLOSURE, MASON PUBLICATIONS, HAMPSHIRE, GB, vol. 392, no. 54, 1 December 1996 (1996-12-01), XP007121467 ISSN: 0374-4353
- ANONYMOUS: "Advantage of metallocene ethylene polymer resins in multilayer stretch films" RESEARCH DISCLOSURE, MASON PUBLICATIONS, HAMPSHIRE, GB, vol. 419, no. 26, 1 March 1999 (1999-03-01), XP007124022 ISSN: 0374-4353

## Description

The present invention refers to a polymeric film comprising odor barrier material and being able to pack malodorous waste.

A lot of waste products produce smells that are annoying to the environment. Example are decayed food, kid nappies and cat litter.

In the prior art there are many films that could be used for protection from malodors. As well known in the art, the use of materials like EVOH, PVDC, polyacrylonitrile is recommended in order to not allow malodors escape from the container (eg bag or other configuration) and create an unpleasant atmosphere.

There are also a lot of known configurations of packing a certain length of film (eg 20 meters) in a compressed form (eg in a cassette). Examples of the representative cassettes are shown in US 4,934,529 or US 3,356,192.

Generally the cassette comprises a tubular core, casing wall and cassette bottom. The film is pulled through the area between the lid of the cassette and the casing wall. The flexible tubing is dispensed from the cassette. After the malodorous item is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

### FILM CHARACTERISTICS

In the prior art a lot of possible film configurations either monolayer or multilayer have been proposed. The basic characteristics a film should have in order to be used in the particular case are
1. Barrier to odours
2. To have the proper deadfold properties (non resilient) so that is compressed efficiently in the cassette.
3. To have sufficient mechanical properties (eg tensile strength at break, elongation).

We have surprisingly found that all these features can be achieved with a very lightweight multilayer film with grammage less than 19 grs/square meter. This is extremely beneficial for the environment as multilayer films are extremely difficult to be produced with so small weight per surface.

### SUMMARY OF THE INVENTION

The invention is directed to a multilayer film with a weight of less than 19g/m² used in malodorous item packaging, where the film comprises ethylene alpha olefin copolymer with a density less than 0.950 g/cm³ in at least one of the outer or inner layers.

In a preferred embodiment, the film has the following configuration:
1. More than 3 layers in total.
2. Two layers comprising ethylene alpha olefin copolymer with density less than 0.950.
3. An oxygen barrier layer.

### Definitions:

In this application the following definitions are used:
The term "film" refers to a flat or tubular flexible structure of thermoplastic material.
The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerine is used as a reference liquid.
The term "total heat shrinkability" refers to the sum of heat shrinkability at the MD direction and heat shrinkability at the TD direction. In all cases, ASTM 2732 is used for measurement of shrinkabilities.
The term "multilayer" refers to a film comprising 3 or more layers.
The phrase "longitudinal direction" or "machine direction" herein abbreviated " MD" refers to a direction along the length of the film.
The phrase "outer layer" refers to the film layer which comes in immediate contact with the outside environment (atmosphere).
The phrase "inner layer" refers to the film layer that comes in direct contact with the product packed. This is also called "sealing layer" as this layer must be hermetically sealed in order to protect the product from ingress of air.
As used herein, the term "homopolymer" refers to a polymer resulting from polymerization of a single monomer.
As used herein, the term "copolymer" refers to a polymer resulting from polymerization of at least two different polymers.
As used herein, the term "polymer" includes both above types.
As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).
As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.
As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.
As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.
As used herein the phrase "ethylene methacrylate copolymers" refers to copolymers of ethylene and methacrylate monomer. The monomer content is less than 40%.
As used herein the phrase "ethylene vinyl acetate copolymer" or EVA refer to copolymers of ethylene and vinyl acetate.
As used herein, the term EVOH refers to saponified products of ethylene vinyl ester copolymers. The ethylene content is typically in the range of 25 to 50%.
As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.
As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.
As used herein the term "polyester" refers to polymers comprising terephthalate units. Examples of polyesters are PET (polyethylene terephthalate), PBT(polybutylene terephthalate), polyester elastomer ( block copolymer comprising ester or ether units), PTT and other similar polymers.
As used herein, the term "ionomer" comprises the copolymers of ethylene and methacrylic or acrylic acid being metal neutralized. An example of such material is Surlyn from Dupont.
As used herein the term "substantially non resilient material" refers to materials or material compounds comprising at least 40% per weight inorganics like calcium carbonate, titanium dioxide, wollastonite, mica, glass fibers, dolomite and the like. The rest percentage per weight can be polyethylene, polypropylene, styrene polymer or other thermoplastic material.
All measurement methods mentioned herein are readily available for the skilled person. For example, they can be obtained from the American National Standards Institute at: www.webstore.ansi.org

### DETAILED DESCRIPTION OF THE INVENTION

According to a first aspect the present invention is directed to a multilayer film with weight less than 19g/m² used in malodorous item packaging, where the film comprises ethylene alpha olefin copolymer with a density less than 0.950 g/cm³ in at least one layer.

The multilayer film of the present invention preferably comprises two layers comprising ethylene alpha olefin copolymer with a density less than 0.950 g/cm³ in both layers.

In a further preferred embodiment, the film has the construction:
OUTER LAYER/INTERMEDIATE LAYER/BARRIER LAYER/INTERMEDIATE LAYER/INNER LAYER,
   where both, outer and inner layer, comprise ethylene alpha olefin copolymer. It is noted that for the purposes of the present invention, the term "inner layer" is to be regarded as an additional outer layer of the multilayer film, which is in direct contact with the item to be packaged (i.e. an outer layer of the film which is located on the inside after a packaging process, not exposed to the environment).

According to a further embodiment, the present invention is of the same configuration where both inner and outer layer comprise a "substantially non resilient material" (SNR).

In a preferred version of the invention, the SNR material is at least 10 percent, preferably at least 20, preferably at least 30 percent of at least one of outer and inner layers.

Preferably, the film comprises an oxygen barrier layer. In a preferred version of the invention this barrier material in the barrier layer is polyamide. Polyamide 6, polyamide 6/66 and MXD nylon are especially preferred.

In the intermediate layers, typical adhesive resins like maleic anhydrite modified polyolefins may be used. Typical examples are BYNEL from Dupont and OREVAC from Arkema.

Additives well known in the art may be used in one or more layers of the present invention. Slip additives, antiblock additives, antifog, polymer processing aids may be used if pertinent. Antimicrobial additives may also be used in one or more of the layers to inhibit the microbe formation. Preferably the antimicrobial is put on the side where the waste is in direct vicinity.

The object of the invention is to produce the film of the above structure with a weight less than 19 grams per square meter. Preferably the weight is lower than 18 grams per square meter or even lower. Even more preferably, the weight is lower than 17 or 16 grams per square meter.

In order to increase the mechanical properties the film may be crosslinked with one of the following methods.

E-beam radiation, gamma radiation, moisture crosslinking using silane grafting compounds, peroxide crosslinking.

The film may be in tubular form or sealed at the edges or single sheet configuration. Centrefold configuration is also possible.

The preferred production method for the film is the how blown film method, which is well known in the art. Other methods like extrusion through flat cast die is also possible.

### EXAMPLES

A 5 layer film is produced in a commercial hot blown film line with the following recipe
Inner layer, 80% EAO1+ 15% SNR1+ 5% ADDITIVES
Adjacent layer 100% ADH 1
Barrier layer PA1
Adjacent layer 100% ADH1
Outer layer same as inner layer
See table 1

The thickness of the structure is 6/1.5/1.5/1.5/6 starting from the inner and going to the outer layer.

**TABLE 1**

| Type | Description | Density g/cm³ |
|---|---|---|
| EAO1 | Ethylene octene copolymer | 0.92 |
| SNR1 | Calcium carbonate compound | 1.6 |
| AD1 | LLDPE mod. Adhesive tie | 0.92 |
| PA1 | Polyamide 6 | 1.128 |
| PA2 | MXD based polyamide | |

### EXAMPLE 2

A 5 layer film is produced in a hot blown film commercial line with the following recipe
Inner layer, 80% EAO1+ 15% SNR1+ 5% ADDITIVES
Adjacent layer 100% ADH 1
Barrier layer 80% PA1+20%PA2
Adjacent layer 100% ADH1
Outer layer same as inner layer
See table 1

The thickness of the structure is 6/1.5/1.5/1.5/6 starting from the inner and going to the outer layer.
See table 1

### Tests

1. Tensile strength and elongation test is done according to ASTM D 882.
2. Odour test is done in the following way.

### TEST 1.

Tensile strength and elongation is measured as per ASTM D882.
MD stands for machine direction, whereas TD stands for transverse direction.

| EXAMPLE | TENSILE STRENGTH(MD) | ELONGATION (MD) | TENSILE STRENGTH(TD) | ELONGATION (TD) |
|---|---|---|---|---|
| 1 | 20 | 150 | 15 | 380 |
| 2 | 25 | 120 | 19 | 370 |

### ODOUR TESTING

10 soiled diapers are put in a film of the present invention and also in a commercially sold film. The commercially sold film is believed to be monolayer.

The packs are put in PVDC comprising bags, so the odour cannot escape during the time of the evaluation.

The bags are opened 3 days after the soiling of the diapers and smell was evaluated by a 5 member panel.

The packs made from examples 1 and 2 were found substantially less smelly than the commercially sold ones.

## Claims

1. A multilayer film with weight less than 19g/m² for use in malodorous item packaging, where the film has an outer and inner layer comprising ethylene alpha olefin copolymer with a density less than 0.950 g/cm³ and a substantially non resilient material, and an oxygen barrier layer.

2. The multilayer film of claim 1, where the oxygen barrier layer comprises polyamide or EVOH.

3. The multilayer film of claim 1, where the film is produced by the hot blown film method.

4. The multilayer film of any of the above claims where the grammage of the film is less than 17 g/m².

5. The multilayer film of claim 4, where the grammage of the film is less than 16 g/m².

6. The multilayer film of any of the previous claims, wherein the substantially non resilient material is a material comprising at least 40% per weight inorganics selected from the group consisting of calcium carbonate, titanium dioxide, wollastonite, mica, glass fibers, and dolomite.

7. Use of the multilayer film of any of the previous claims in malodorous item packaging.

## Patentansprüche

1. Mehrschichtfilm mit einem Gewicht von weniger als 19 g/m² zur Verwendung in der Verpackung von übelriechenden Gegenständen, wobei der Film eine äußere und eine innere Schicht, die Ethylen Alpha Olefin-Copolymer mit einer Dichte von weniger als 0,950 g/cm³ umfasst und ein im Wesentlichen nicht nachgiebiges Material, und eine Sauerstoffbarriereschicht aufweist.

2. Mehrschichtfilm nach Anspruch 1, wobei die Sauerstoffbarriereschicht Polyamid oder EVOH umfasst.

3. Mehrschichtfilm nach Anspruch 1, wobei der Film durch das Heiß-Blasfilmverfahren hergestellt ist.

4. Mehrschichtfilm nach einem der obigen Ansprüche, wobei das Flächengewicht des Films weniger als 17 g/m² beträgt.

5. Mehrschichtfilm nach Anspruch 4, wobei das Flächengewicht des Films weniger als 16 g/m² beträgt.

6. Mehrschichtfilm nach einem der vorhergehenden Ansprüche, wobei das im Wesentlichen nicht nachgiebige Material ein Material ist, das zumindest 40 Gew.-% anorganische Bestandteile umfasst, ausgewählt aus der Gruppe, die aus Calciumcarbonat, Titandioxid, Wollastonit, Mica, Glassfasern und Dolomit besteht.

7. Verwendung des Mehrschichtfilms nach einem der vorhergehenden Ansprüche zur Verpackung von übelriechenden Gegenständen.

## Revendications

1. Film en multicouches d'un poids inférieur à 19 g/m² pour un usage en tant que conditionnement pour articles malodorants, où le film a une couche interne et une couche externe comprenant un copolymère éthylène alpha oléfine avec une densité inférieure à 0,950 g/cm³ et un matériau substantiellement non résilient, et une couche de barrière vis-à-vis de l'oxygène.

2. Film en multicouches selon la revendication 1, où la couche de barrière vis-à-vis de l'oxygène comprend du polyamide ou de l'EVOH.

3. Film en multicouches selon la revendication 1, où le film est produit par le procédé du film soufflé à chaud.

4. Film en multicouches selon l'une quelconque des revendications ci-dessus, où le grammage du film est inférieur à 17 g/m².

5. Film en multicouches selon la revendication 4, où le grammage du film est inférieur à 16 g/m².

6. Film en multicouches selon l'une quelconque des revendications précédentes, dans lequel le matériau substantiellement non résilient est un matériau comprenant au moins 40 % en poids de minéraux choisis dans le groupe constitué par du carbonate de calcium, du dioxyde de titane, de la wollastonite, du mica, des fibres de verre, et de la dolomite.

7. Utilisation du film en multicouches selon l'une quelconque des revendications précédentes pour le conditionnement d'articles malodorants.
